# EUROPÄISCHE PATENTSCHRIFT

(11) **EP 2 890 525 B1**
(45) Veröffentlichungstag und Bekanntmachung des Hinweises auf die Patenterteilung: **25.05.2016**
(21) Anmeldenummer: 13750028.6
(22) Anmeldetag: 12.08.2013
(51) Int. Cl.: B25F 5/02, B25H 1/00, B27B 9/00

(54) **WERKZEUGMASCHINENSYSTEM**
POWER TOOL SYSTEM
SYSTÈME DE MACHINE-OUTIL

(30) Priorität: 31.08.2012 DE 102012215452
(43) Veröffentlichungstag der Anmeldung: 08.07.2015
(73) Patentinhaber: Robert Bosch GmbH, 70442 Stuttgart (DE)
(72) Erfinder: ENGELFRIED, Uwe, 73760 Ostfildern (DE); FUCHS, Rudolf, 73765 Neuhausen (DE)
(86) Internationale Anmeldenummer: PCT/EP2013/066831
(87) Internationale Veröffentlichungsnummer: WO 2014/032955

(56) Entgegenhaltungen:
- GB-A- 2 042 975
- US-A- 4 033 035
- US-A- 6 038 775
- US-B1- 7 310 879

## Beschreibung

### Stand der Technik

Aus der US 4 033 035 A ist ein Werkzeugmaschinensystem bekannt, welches eine Werkzeugmaschinentrennvorrichtung umfasst. Die Werkzeugmaschinentrennvorrichtung umfasst einen Schneidstrang und eine Führungseinheit, sowie eine tragbare Werkzeugmaschine, welche eine Kopplungsvorrichtung zu einer Kopplung der Werkzeugmaschinentrennvorrichtung und eine Betriebsauflageeinheit umfasst, die eine Auflagefläche aufweist.

### Offenbarung der Erfindung

Die Erfindung geht aus von einem Werkzeugmaschinensystem mit zumindest einer Werkzeugmaschinentrennvorrichtung, die zumindest einen Schneidstrang und zumindest eine Führungseinheit, die zusammen mit dem Schneidstrang ein geschlossenes System bildet, umfasst, und mit zumindest einer tragbaren Werkzeugmaschine, die zumindest eine Kopplungsvorrichtung zu einer Kopplung der Werkzeugmaschinentrennvorrichtung und zumindest eine Betriebsauflageeinheit umfasst, die zumindest eine Auflagefläche aufweist.

Es wird vorgeschlagen, dass die tragbare Werkzeugmaschine zumindest eine Führungsstangeneinheit umfasst, die zumindest ein Führungsstangenelement zu einer beweglichen Lagerung der Kopplungsvorrichtung entlang einer zumindest im Wesentlichen senkrecht zur Auflagefläche verlaufenden Hubachse der Führungsstangeneinheit relativ zur Betriebsauflageeinheit aufweist. Unter einem "Schneidstrang" soll hier insbesondere eine Einheit verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Besonders vorteilhaft können Schneidspalte mit geringen Abmessungen erzeugt werden, indem der Schneidstrang, entlang der zumindest im Wesentlichen senkrecht zur Schneidebene des Schneidstrangs verlaufenden Richtung betrachtet, eine maximale Abmessung zwischen 1,3 mm und 2,2 mm aufweist. Besonders bevorzugt wird der Schneidstrang in zumindest einem Betriebszustand umlaufend bewegt, insbesondere entlang eines Umfangs der Führungseinheit. Unter einer "Führungseinheit" soll hier insbesondere eine Einheit verstanden werden, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. In diesem Zusammenhang soll unter "vorgesehen" insbesondere speziell ausgelegt und/oder speziell ausgestattet verstanden werden. Bevorzugt weist die Führungseinheit zumindest ein Führungselement auf, insbesondere eine Führungsnut, durch das der Schneidstrang geführt wird. Bevorzugt ist der Schneidstrang, in einer Schneidebene betrachtet, entlang eines gesamten Umfangs der Führungseinheit durch die Führungseinheit mittels des Führungselements, insbesondere der Führungsnut, geführt. Vorzugsweise weist die Führungseinheit zusammen mit dem montierten Schneidstrang, entlang einer zumindest im Wesentlichen parallel zur Schneidebene des Schneidstrangs und zumindest im Wesentlichen senkrecht zu einer Haupterstreckungsrichtung der Führungseinheit verlaufenden Richtung betrachtet, eine maximale Abmessung, insbesondere eine Höhe, kleiner als 50 mm auf.

Der Begriff "Schneidebene" soll hier insbesondere eine Ebene definieren, in der der Schneidstrang in zumindest einem Betriebszustand entlang eines Umfangs der Führungseinheit in zumindest zwei zueinander entgegengesetzt gerichtete Schneidrichtungen relativ zur Führungseinheit bewegt wird. Bevorzugt ist die Schneidebene bei einer Bearbeitung eines Werkstücks zumindest im Wesentlichen quer zu einer zu bearbeitenden Werkstückoberfläche ausgerichtet. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Es ist jedoch auch denkbar, dass die Schneidebene bei einer Bearbeitung eines Werkstücks zumindest im Wesentlichen parallel zu einer zu bearbeitenden Werkstückoberfläche ausgerichtet ist, insbesondere bei einer Ausbildung des Schneidstrangs als Schleifmittel usw. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Schneidrichtung" soll hier insbesondere eine Richtung verstanden werden, entlang der der Schneidstrang zur Erzeugung eines Schneidspalts und/oder zur Abtrennung und/oder zur Abtragung von Werkstoffteilchen eines zu bearbeitenden Werkstücks in zumindest einem Betriebszustand infolge einer Antriebskraft und/oder eines Antriebsmoments, insbesondere in der Führungseinheit, bewegt wird. Bevorzugt wird der Schneidstrang in einem Betriebszustand entlang der Schneidrichtung relativ zur Führungseinheit bewegt.

Vorzugsweise bilden die Führungseinheit und der Schneidstrang zusammen ein geschlossenes System. Der Begriff "geschlossenes System" soll hier insbesondere ein System definieren, das zumindest zwei Komponenten umfasst, die mittels eines Zusammenwirkens in einem demontierten Zustand des Systems von einem dem System übergeordneten System, wie beispielsweise einer Werkzeugmaschine, eine Funktionalität beibehalten und/oder die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmitteln usw., voneinander trennbar sind.

Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Die tragbare Werkzeugmaschine kann hierbei als kabelgebundene oder als akkubetriebene, tragbare Werkzeugmaschine ausgebildet sein. Die tragbare Werkzeugmaschine umfasst zu einem Antrieb des Schneidstrangs in einem an der Kopplungsvorrichtung angeordneten Zustand zumindest eine Antriebseinheit. Der Begriff "Antriebseinheit" soll hier insbesondere eine Einheit definieren, die dazu vorgesehen ist, Kräfte und/oder Drehmomente zu einem Antrieb des Schneidstrangs zu erzeugen. Bevorzugt wird zur Erzeugung von Kräften und/oder Drehmomenten mittels der Antriebseinheit thermische Energie, chemische Energie und/oder elektrische Energie in Bewegungsenergie umgewandelt. Insbesondere ist die Antriebseinheit direkt und/oder indirekt mit dem Schneidstrang koppelbar ausgebildet. Besonders bevorzugt umfasst die Antriebseinheit zumindest einen Stator und zumindest einen Rotor, der zumindest eine Ankerwelle aufweist. Somit ist die Antriebseinheit insbesondere als Elektromotoreinheit ausgebildet.

Unter einer "Betriebsauflageeinheit" soll hier insbesondere eine Einheit verstanden werden, die während einer Bearbeitung eines Werkstücks mittels der Werkzeugmaschine bei einer ordnungsgemäßen Handhabung der Werkzeugmaschine auf dem Werkstück aufliegt, insbesondere mit der Auflagefläche der Betriebsauflageeinheit, und die dazu vorgesehen ist, die Werkzeugmaschine während einer Bearbeitung des Werkstücks auf dem Werkstück abzustützen. Besonders bevorzugt ist die Betriebsauflageeinheit als Gleitschuh und/oder als Grundplatte ausgebildet. Vorzugsweise gleitet die Werkzeugmaschine während einer Bearbeitung des Werkstücks mittels der Betriebsauflageeinheit, insbesondere mit der Auflagefläche der Betriebsauflageeinheit, auf einer Oberfläche des zu bearbeitenden Werkstücks. Der Ausdruck "Führungsstangeneinheit" soll hier insbesondere eine Einheit definieren, die dazu vorgesehen ist, ein Bauteil bei einer Bewegung in einer Ebene entlang einer vorgegebenen Bahn mittels einer Einwirkung von zumindest einer Zwangskraft quer zu einer Bewegungsrichtung zu führen. Besonders bevorzugt ist die Führungsstangeneinheit als Linearführungseinheit ausgebildet, die dazu vorgesehen ist, die Kopplungsvorrichtung bei einer Bewegung relativ zur Betriebsauflageeinheit linear zu führen. Unter einer "Zwangskraft" soll hier insbesondere eine Kraft verstanden werden, die dazu vorgesehen ist, ein Bauteil an einer Bewegung in zumindest eine Richtung zu hindern und/oder das Bauteil bei einer Bewegung auf einer mittels einer Einwirkung der Kraft auf das Bauteil vorgegebenen Bahn zu halten. Besonders bevorzugt wird die Kopplungsvorrichtung mittels der Führungsstangeneinheit linear entlang der Hubachse geführt. Mittels der erfindungsgemäßen Ausgestaltung des Werkzeugmaschinensystems kann vorteilhaft eine kompakte Bauform der tragbaren Werkzeugmaschine realisiert werden. Zudem kann vorteilhaft ein Eintauchschnitt, insbesondere ein sehr schmaler Eintauchschnitt, mittels des Werkzeugmaschinensystems in ein zu bearbeitendes Werkstück ermöglicht werden.

Des Weiteren wird vorgeschlagen, dass die tragbare Werkzeugmaschine zumindest ein Werkzeugmaschinengehäuse umfasst, an dessen, betrachtet entlang einer zumindest im Wesentlichen parallel zu einer Antriebseinheitslängsachse einer Antriebseinheit der tragbaren Werkzeugmaschine verlaufenden Richtung, der Betriebsauflageeinheit zugewandter Seite die Kopplungsvorrichtung angeordnet ist. Hierbei ist die Kopplungsvorrichtung vorzugsweise, betrachtet entlang einer Rotationsachse einer Ankerwelle der Antriebseinheit, auf einer der Betriebsauflageeinheit zugewandten Seite des Werkzeugmaschinengehäuses angeordnet. Somit wird die Antriebseinheitslängsachse der Antriebseinheit vorzugsweise von der Rotationsachse der Ankerwelle der Antriebseinheit gebildet. Mittels der erfindungsgemäßen Anordnung kann vorteilhaft eine Nutzung zumindest im Wesentlichen einer Gesamtlänge der Werkzeugmaschinentrennvorrichtung zu einer Bearbeitung eines Werkstücks genutzt werden. Die Werkzeugmaschinentrennvorrichtung kann vorteilhaft an einer einem zu bearbeitenden Werkstück zugewandten Seite des Werkzeugmaschinengehäuses angeordnet werden. Somit kann vorteilhaft ein bedienerfreundliches Werkzeugmaschinensystem erreicht werden, das eine komfortable Bearbeitung von Werkstücken ermöglicht.

Erfindungsgemäß wird vorgeschlagen, dass die tragbare Werkzeugmaschine zumindest das Werkzeugmaschinengehäuse aufweist und die Führungsstangeneinheit zumindest ein Federelement aufweist, das die Betriebsauflageeinheit und das Werkzeugmaschinengehäuse relativ zueinander vorspannt. Unter einem "Federelement" soll insbesondere ein makroskopisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegen wirkt. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Besonders bevorzugt ist das Federelement als Schraubenfeder ausgebildet. Vorzugsweise stützt sich die Schraubenfeder mit einem Ende an dem Werkzeugmaschinengehäuse ab und mit einem weiteren Ende der Schraubenfeder stützt sich die Schraubenfeder zur Vorspannung der Betriebsauflageeinheit relativ zum Werkzeugmaschinengehäuse an der Betriebsauflageeinheit ab. Es ist jedoch auch denkbar, dass das Federelement eine andere, einem Fachmann als sinnvoll erscheinende Ausgestaltung und/oder Anordnung aufweist. Mittels einer Federkraft des Federelements kann vorteilhaft eine Vorspannung der Betriebsauflageeinheit relativ zum Werkzeugmaschinengehäuse erreicht werden. Ferner kann vorteilhaft zuverlässig bei einer Aufhebung beispielsweise einer Betätigungskraft eines Bedieners mittels der Federkraft des Federelements eine Erreichung und/oder eine Einhaltung einer vorgegebenen relativen Ausgangsposition zwischen der Betriebsauflageeinheit und dem Werkzeugmaschinengehäuse erreicht werden.

Zudem wird vorgeschlagen, dass die tragbare Werkzeugmaschine zumindest die Antriebseinheit umfasst, die eine zumindest im Wesentlichen parallel zu einer Schneidebene des Schneidstrangs und/oder zu einer Längsachse der Führungseinheit verlaufende Antriebseinheitslängsachse umfasst. Unter einer "Antriebseinheitslängsachse" soll hier insbesondere eine Achse der Antriebseinheit verstanden werden, die zumindest im Wesentlichen koaxial zu einer Rotationsachse einer Antriebswelle der Antriebseinheit, insbesondere einer Ankerwelle der Antriebseinheit, verläuft. Insbesondere weist die Antriebseinheit entlang der Antriebseinheitslängsachse eine maximale Abmessung auf. Der Begriff "Längsachse" soll hier insbesondere eine Achse definieren, entlang der ein Bauteil, insbesondere die Führungseinheit, eine maximale Abmessung aufweist. Mittels der erfindungsgemäßen Ausgestaltung kann vorteilhaft eine kompakte tragbare Werkzeugmaschine realisiert werden, insbesondere eine kompakte tragbare Werkzeugmaschine hinsichtlich seitlicher Ausdehnungen.

Des Weiteren wird vorgeschlagen, dass die tragbare Werkzeugmaschine zumindest eine Eintauchtiefeneinstelleinheit umfasst, die, betrachtet entlang einer zumindest im Wesentlichen parallel zur Hubachse verlaufenden Richtung, eine Bewegungsstrecke der Kopplungsvorrichtung relativ zur Betriebsauflageeinheit begrenzt. Unter einer "Eintauchtiefeneinstelleinheit" soll hier insbesondere eine Einheit verstanden werden, die eine Eintauchstrecke der Werkzeugmaschinentrennvorrichtung in ein zu bearbeitendes Werkstück, betrachtet entlang einer zumindest im Wesentlichen senkrecht zur Auflagefläche verlaufenden Richtung, auf eine gewünschte Länge begrenzt. Die Funktion der Eintauchtiefeneinstelleinheit ist insbesondere entkoppelt von einer Begrenzung einer Eintauchstrecke der Werkzeugmaschinentrennvorrichtung infolge eines Anstehens der Kopplungsvorrichtung an einer Werkstückoberfläche eines zu bearbeitenden Werkstücks. Mittels der erfindungsgemäßen Ausgestaltung können vorteilhaft Schnitte, wie beispielsweise Nuten usw., mit einer gewünschten Tiefe besonders komfortabel und vorteilhaft reproduzierbar in ein Werkstück eingebracht werden.

Ferner wird vorgeschlagen, dass die tragbare Werkzeugmaschine zumindest eine Arretiereinheit zu einer Arretierung der Kopplungsvorrichtung in einer Position relativ zur Betriebsauflageeinheit umfasst. Besonders bevorzugt ist die Arretiereinheit dazu vorgesehen, das Werkzeugmaschinengehäuse mittels eines Formschlusselements und/oder eines Kraftschlusselements der Arretiereinheit in einer gewünschten Position relativ zur Betriebsauflageeinheit, betrachtet entlang einer zumindest im Wesentlichen parallel zur Hubachse verlaufenden Richtung, zu fixieren. Es kann besonders vorteilhaft und konstruktiv einfach eine Beibehaltung einer Schnitttiefeneinstellung zur Ermöglichung eines gleichbleibenden Schnitts über eine lange Verfahrstrecke der tragbaren Werkzeugmaschine auf einer Werkstückoberfläche eines zu bearbeitenden Werkstücks erreicht werden.

Zudem wird vorgeschlagen, dass die Führungsstangeneinheit zumindest ein weiteres Führungsstangenelement umfasst, das zumindest im Wesentlichen parallel zum Führungsstangenelement verläuft. Somit kann vorteilhaft eine gleichmäßige Führung der Kopplungsvorrichtung bzw. des Werkzeugmaschinengehäuses während einer Bewegung relativ zur Betriebsauflageeinheit erreicht werden.

Des Weiteren wird vorgeschlagen, dass die Führungseinheit zumindest eine Längsachse aufweist, die in einem an der Kopplungsvorrichtung angeordneten Zustand der Werkzeugmaschinentrennvorrichtung zumindest im Wesentlichen parallel zu einer Antriebseinheitslängsachse der Antriebseinheit der tragbaren Werkzeugmaschine verläuft. Es kann besonders vorteilhaft ein Werkzeugmaschinensystem geschaffen werden, das zu einem komfortablen Einbringen von Eintauchschnitten in ein Werkstück genutzt werden kann.

Ferner wird vorgeschlagen, dass die Führungseinheit zumindest eine Längsachse aufweist, die in einem an der Kopplungsvorrichtung angeordneten Zustand der Werkzeugmaschinentrennvorrichtung zumindest im Wesentlichen parallel zur Hubachse der Führungsstangeneinheit verläuft. Es kann vorteilhaft eine präzise Führung während einer Einbringung eines Schnitts in ein Werkstück ermöglicht werden.

Des Weiteren geht die Erfindung aus von einer tragbaren Werkzeugmaschine für ein erfindungsgemäßes Werkzeugmaschinensystem. Es kann vorteilhaft ein hoher Bedienkomfort zu einer Einbringung von Schnitten, insbesondere von Eintauchschnitten, in ein Werkstück erreicht werden.

Das erfindungsgemäße Werkzeugmaschinensystem und/oder die erfindungsgemäße Werkzeugmaschine sollen/soll hierbei nicht auf die oben beschriebene Anwendung und Ausführungsform beschränkt sein. Insbesondere können/kann das erfindungsgemäße Werkzeugmaschinensystem und/oder die erfindungsgemäße Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Werkzeugmaschinensystem mit einer erfindungsgemäßen Werkzeugmaschine und mit einer erfindungsgemäßen Werkzeugmaschinentrennvorrichtung in einer schematischen Darstellung und
- Fig. 2: ein alternatives erfindungsgemäßes Werkzeugmaschinensystem mit einer erfindungsgemäßen Werkzeugmaschine und mit einer erfindungsgemäßen Werkzeugmaschinentrennvorrichtung in einer schematischen Darstellung.

### Beschreibung der Ausführungsbeispiele

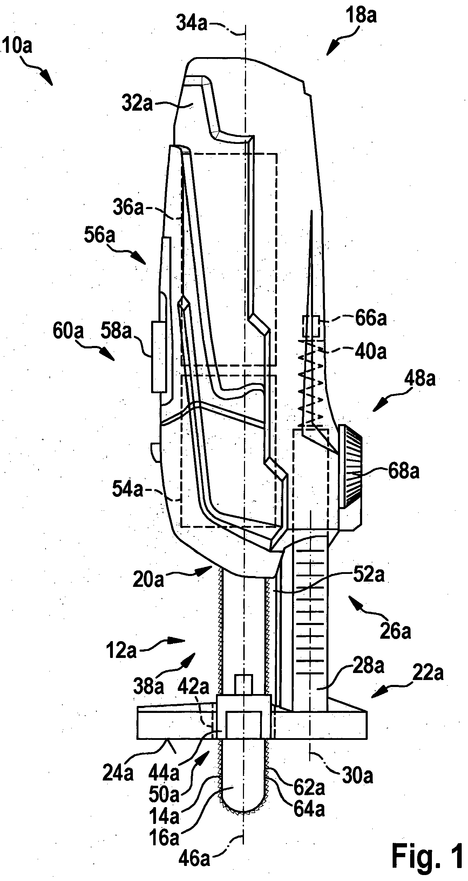

Figur 1 zeigt ein Werkzeugmaschinensystem 10a mit zumindest einer Werkzeugmaschinentrennvorrichtung 12a, die zumindest einen Schneidstrang 14a und zumindest eine Führungseinheit 16a, die zusammen mit dem Schneidstrang 14a ein geschlossenes System bildet, umfasst, und mit zumindest einer tragbaren Werkzeugmaschine 18a, die zumindest eine Kopplungsvorrichtung 20a zu einer Kopplung der Werkzeugmaschinentrennvorrichtung 12a und zumindest eine Betriebsauflageeinheit 22a umfasst, die zumindest eine Auflagefläche 24a aufweist. Die Kopplungsvorrichtung 20a ist dazu vorgesehen, die Werkzeugmaschinentrennvorrichtung 12a formschlüssig und/oder kraftschlüssig mit der tragbaren Werkzeugmaschine 18a zu koppeln. Die Kopplungsvorrichtung 20a kann hierbei als Bajonettverschluss und/oder als eine andere, einem Fachmann als sinnvoll erscheinende Kopplungsvorrichtung ausgebildet sein.

Die tragbare Werkzeugmaschine 18a umfasst ferner zumindest ein Werkzeugmaschinengehäuse 32a, in dem zumindest eine Antriebseinheit 36a der tragbaren Werkzeugmaschine 18a angeordnet ist. Die Kopplungsvorrichtung 20a ist, betrachtet entlang einer zumindest im Wesentlichen parallel zu einer Antriebseinheitslängsachse 34a der Antriebseinheit 36a der tragbaren Werkzeugmaschine 18a, an einer der Betriebsauflageeinheit 22a zugewandten Seite 38a des Werkzeugmaschinengehäuses 32a angeordnet. Das Werkzeugmaschinengehäuse 32a umschließt die Antriebseinheit 36a und eine Getriebeeinheit 54a der tragbaren Werkzeugmaschine 18a und stützt Lagerkräfte der Antriebseinheit 36a und der Getriebeeinheit 54a ab. Hierbei weist das Werkzeugmaschinengehäuse 32a eine stabförmige Ausgestaltung auf. Somit bildet ein Teilbereich des Werkzeugmaschinengehäuses 32a einen Handgriffbereich 56a der tragbaren Werkzeugmaschine 18a. Ein Bedienelement 58a einer Bedieneinheit 60a der tragbaren Werkzeugmaschine 18a zu einer Inbetriebnahme bzw. zu einer Unterbrechung einer Stromversorgung der Antriebseinheit 36a ist im Handgriffbereich 56a am Werkzeugmaschinengehäuse 32a angeordnet. Ferner wird die Antriebseinheit 36a von dem Handgriffbereich 56a umschlossen. Somit ist die Antriebseinheit 36a innerhalb des Werkzeugmaschinengehäuses 32a in der Region des Handgriffbereichs 56a angeordnet.

Die Antriebseinheit 36a und die Getriebeeinheit 54a sind zur Erzeugung eines auf die Werkzeugmaschinentrennvorrichtung 12a übertragbaren Antriebsmoments auf eine, einem Fachmann bereits bekannte Art und Weise wirkungsmäßig miteinander verbunden. Die Getriebeeinheit 54a ist als Winkelgetriebe ausgebildet. Die Antriebseinheit 36a ist als Elektromotoreinheit ausgebildet. Hierbei umfasst die Antriebseinheit 36a eine zumindest im Wesentlichen parallel zu einer Schneidebene des Schneidstrangs 14a und/oder zu einer Längsachse 46a der Führungseinheit 16a verlaufende Antriebseinheitslängsachse 34a. Die Antriebseinheitslängsachse 34a wird von einer Rotationsachse einer Ankerwelle (hier nicht näher dargestellt) der Antriebseinheit 36a gebildet. Es ist jedoch auch denkbar, dass die Antriebseinheit 36a und/oder die Getriebeeinheit 54a eine andere, einem Fachmann als sinnvoll erscheinende Ausgestaltung aufweisen.

Die Antriebseinheit 36a ist dazu vorgesehen, den Schneidstrang 14a der Werkzeugmaschinentrennvorrichtung 12a in einem an der Kopplungsvorrichtung 20a angeordneten Zustand der Werkzeugmaschinentrennvorrichtung 12a über die Getriebeeinheit 54a anzutreiben. In einem an der Kopplungsvorrichtung 20a angeordneten Zustand der Werkzeugmaschinentrennvorrichtung 12 greift ein als Zahnrad ausgebildetes Abtriebselement (hier nicht näher dargestellt) der Getriebeeinheit 54a in die Führungseinheit 16a ein. Hierbei ist das Abtriebselement zu einem Antrieb des Schneidstrangs 14a temporär in Eingriff mit Schneidstrangsegmenten 62a, 64a des Schneidstrangs 14a. Das Abtriebselement ist drehfest mittels einer formschlüssigen und/oder kraftschlüssigen Verbindung auf einer Abtriebswelle der Getriebeeinheit 54a befestigt. Es ist jedoch auch denkbar, dass das Abtriebselement einstückig mit der Abtriebswelle ausgebildet ist.

Der Schneidstrang 14a und die Führungseinheit 16a der Werkzeugmaschinentrennvorrichtung 12a bilden zusammen ein geschlossenes System. Der Schneidstrang 14a wird mittels der Führungseinheit 16a geführt. Hierzu weist die Führungseinheit 16a zumindest eine Führungsnut auf (hier nicht näher dargestellt). Der Schneidstrang 14a wird mittels die Führungsnut begrenzender Randbereiche der Führungseinheit 16a geführt. Es ist jedoch auch denkbar, dass die Führungseinheit 16a ein anderes, einem Fachmann als sinnvoll erscheinendes Element zur Führung des Schneidstrangs 14a aufweist, wie beispielsweise ein als rippenartige Anformung an die Führungseinheit 16a ausgebildetes Element, das in eine Ausnehmung an dem Schneidstrang 14a eingreift. Der Schneidstrang 14a wird während eines Betriebs umlaufend entlang eines Umfangs der Führungseinheit 16a in der Führungsnut bewegt. Der Schneidstrang 14a ist als Schneidkette ausgebildet. Hierzu umfasst der Schneidstrang 14a eine Vielzahl miteinander verbundener Schneidstrangsegmente 62a, 64a.

Des Weiteren umfasst die tragbare Werkzeugmaschine 18a zumindest eine Führungsstangeneinheit 26a, die zumindest ein Führungsstangenelement 28a zu einer beweglichen Lagerung der Kopplungsvorrichtung 20 entlang einer zumindest im Wesentlichen senkrecht zur Auflagefläche 24a verlaufenden Hubachse 30a der Führungsstangeneinheit 26a relativ zur Betriebsauflageeinheit 22a. Das Führungsstangenelement 28a ist mit einem Ende an der Betriebsauflageeinheit 22a fixiert. Mit einem der Betriebsauflageeinheit 22a abgewandten, weiteren Ende erstreckt sich das Führungsstangenelement 28a in das Werkzeugmaschinengehäuse 32a hinein. Das Werkzeugmaschinengehäuse 32a ist translatorisch beweglich relativ zum Führungsstangenelement 28a. Hierzu ist das Führungsstangenelement 28a in einer Lagerausnehmung (hier nicht näher dargestellt) des Werkzeugmaschinengehäuses 32a beweglich gelagert.

Die Führungsstangeneinheit 26a umfasst zumindest ein weiteres Führungsstangenelement 52a, das zumindest im Wesentlichen parallel zum Führungsstangenelement 28a verläuft. Das weitere Führungsstangenelement 52a ist mit einem Ende an der Betriebsauflageeinheit 22a fixiert. Mit einem der Betriebsauflageeinheit 22a abgewandten, weiteren Ende erstreckt sich das weitere Führungsstangenelement 52a in das Werkzeugmaschinengehäuse 32a hinein. Das Werkzeugmaschinengehäuse 32a ist ebenfalls translatorisch beweglich relativ zum weiteren Führungsstangenelement 52a. Hierzu ist das weitere Führungsstangenelement 52a in einer Lagerausnehmung (hier nicht näher dargestellt) des Werkzeugmaschinengehäuses 32a beweglich gelagert. Das Führungsstangenelement 28a und das weitere Führungsstangenelement 52a erstrecken sich zumindest im Wesentlichen parallel zur Hubachse 30a. Ferner verläuft die Längsachse 46a der Führungseinheit 16a in einem an der Kopplungsvorrichtung 20a angeordneten Zustand der Werkzeugmaschinentrennvorrichtung 12a ebenfalls zumindest im Wesentlichen parallel zur Hubachse 30a der Führungsstangeneinheit 26a. Zudem verläuft die Längsachse 46a der Führungseinheit 16a in einem an der Kopplungsvorrichtung 20a angeordneten Zustand der Werkzeugmaschinentrennvorrichtung 12a zumindest im Wesentlichen parallel zu der Antriebseinheitslängsachse 34a der Antriebseinheit 36a der tragbaren Werkzeugmaschine 18a.

Ferner umfasst die Führungsstangeneinheit 26a zumindest ein Federelement 40a, das die Betriebsauflageeinheit 22a und das Werkzeugmaschinengehäuse 32a relativ zueinander vorspannt. Das Federelement 40a ist als Schraubenfeder ausgebildet. Insgesamt weist die Führungsstangeneinheit 26a zwei Federelemente 40a auf (in Figur 1 lediglich eines der beiden Federelemente 40a dargestellt), die als Schraubenfedern ausgebildet sind. Es ist jedoch auch denkbar, dass die Führungsstangeneinheit 26a eine von zwei abweichende Anzahl an Federelementen 40a aufweist. Hierbei ist eines der Federelemente 40a dem Führungsstangenelement 28a zugeordnet und eines der Federelemente 40a ist dem weiteren Führungsstangenelement 52a zugeordnet. Die Federelemente 40a stützen sich jeweils mit einem Ende an dem Werkzeugmaschinengehäuse 32a ab und mit einem weiteren Ende stützen sich die Federelemente 40a an dem Führungsstangenelement 28a bzw. an dem weiteren Führungsstangenelement 52a ab. Es ist jedoch auch denkbar, dass sich die Federelemente 40a jeweils mit einem Ende an dem Werkzeugmaschinengehäuse 32a abstützen und sich mit einem weiteren Ende an der Betriebsauflageeinheit 22a abstützen. Bei einer Bewegung des Werkzeugmaschinengehäuses 32a bzw. der Kopplungsvorrichtung 20a in Richtung der Betriebsauflageeinheit 22a werden die Federelemente 40a komprimiert. Durch die Bewegung des Werkzeugmaschinengehäuses 32a bzw. der Kopplungsvorrichtung 20a in Richtung der Betriebsauflageeinheit 22a wird die Werkzeugmaschinentrennvorrichtung 12a in einem an der Kopplungsvorrichtung 20a angeordneten Zustand zu einer Bearbeitung eines zu bearbeitenden Werkstücks (hier nicht näher dargestellt) in Richtung des Werkstücks bewegt. Die Betriebsauflageeinheit 22a umfasst zu einer Durchführung der Werkzeugmaschinentrennvorrichtung 12a zumindest eine Durchführausnehmung 42a. Somit kann sich die Werkzeugmaschinentrennvorrichtung 12a zu einer Bearbeitung eines zu bearbeitenden Werkstücks über die Auflagefläche 24a hinweg erstrecken.

Des Weiteren umfasst die tragbare Werkzeugmaschine 18a zumindest eine Eintauchtiefeneinstelleinheit 48a, die, betrachtet entlang einer zumindest im Wesentlichen parallel zur Hubachse 30a verlaufenden Richtung, eine Bewegungsstrecke der Kopplungsvorrichtung 20a relativ zur Betriebsauflageeinheit 22a begrenzt. Hierbei begrenzt die Eintauchtiefeneinstelleinheit 48a, betrachtet entlang der zumindest im Wesentlichen parallel zur Hubachse 30a verlaufenden Richtung, eine Bewegungsstrecke des Werkzeugmaschinengehäuses 32a relativ zur Betriebsauflageeinheit 22a. Hierzu umfasst die Eintauchtiefeneinstelleinheit 48a ein verstellbares Tiefenanschlagelement 66a. Eine Position des Tiefenanschlagelements 66a relativ zum Werkzeugmaschinengehäuse 32a wird mittels eines Anschlagbedienelements 68a der Eintauchtiefeneinstelleinheit 48a eingestellt. Hierdurch wird ein relativer Abstand des Tiefenanschlagelements 66a zu dem Führungsstangenelement 28a und dem weiteren Führungsstangenelement 52a eingestellt. Eine Bewegungsstrecke des Werkzeugmaschinengehäuses 32a relativ zur Betriebsauflageeinheit 22a wird somit auf eine, einem Fachmann bereits bekannte Art und Weise eingestellt.

Ferner umfasst die tragbare Werkzeugmaschine 18a zumindest eine Arretiereinheit 50a zu einer Arretierung der Kopplungsvorrichtung 20a in einer Position relativ zur Betriebsauflageeinheit 22a. Hierbei arretiert die Arretiereinheit 50a das Werkzeugmaschinengehäuse 32a, betrachtet entlang einer zumindest im Wesentlichen parallel zur Hubachse 30a verlaufenden Richtung, in einer Position relativ zur Betriebsauflageeinheit 22a. Hierzu weist die Arretiereinheit 50a ein an der Betriebsauflageeinheit 22a angeordnetes Klemmelement 44a auf, das mittels einer Einwirkung einer Klemmkraft auf die Führungseinheit 16a in einem an der Kopplungsvorrichtung 20a angeordneten Zustand der Werkzeugmaschinentrennvorrichtung 12 a das Werkzeugmaschinengehäuse 32a in einer Position relativ zur Betriebsauflageeinheit 22a arretiert. Es ist jedoch auch denkbar, dass die Arretiereinheit 50a zumindest ein weiteres Klemmelement umfasst, das zwischen dem Führungsstangenelement 28a, dem weiteren Führungsstangenelement 52a und dem Werkzeugmaschinengehäuse 32a wirkt, um das Werkzeugmaschinengehäuse 32a in einer Position relativ zur Betriebsauflageeinheit 22a zu arretieren. Es ist jedoch auch denkbar, dass die tragbare Werkzeugmaschine 18a entkoppelt von der Arretiereinheit 50a und entkoppelt von den Federelementen 40a der Führungsstangeneinheit 26a ausgebildet ist. Hierbei würde die Eintauchtiefeneinstelleinheit 48a die Funktionen der Arretiereinheit 50a übernehmen, indem die Eintauchtiefeneinstelleinheit 48a eine Zahnstangeneinheit umfasst, mittels deren das Werkzeugmaschinengehäuse 32a durch eine Betätigung eines als Zahnstangenbedienelements ausgebildeten Anschlagbedienelements 68a relativ zur Betriebsauflageeinheit 22a beweglich wäre.

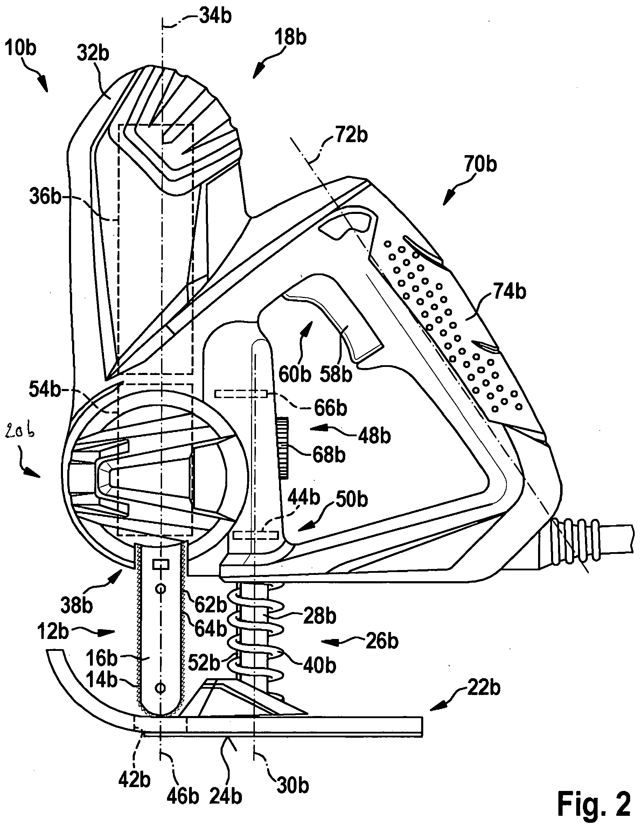

In Figur 2 ist ein alternatives Ausführungsbeispiel dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a und b hinzugefügt. Die nachfolgende Beschreibung beschränkt sich im Wesentlichen auf die Unterschiede zu dem in der Figur 1 beschriebenen ersten Ausführungsbeispiel, wobei bezüglich gleichbleibender Bauteile, Merkmale und Funktionen auf die Beschreibung des ersten Ausführungsbeispiels in der Figur 1 verwiesen werden kann.

Figur 2 zeigt ein Werkzeugmaschinensystem 10b mit zumindest einer Werkzeugmaschinentrennvorrichtung 12b, die zumindest einen Schneidstrang 14b und zumindest eine Führungseinheit 16b, die zusammen mit dem Schneidstrang 14b ein geschlossenes System bildet, umfasst, und mit zumindest einer tragbaren Werkzeugmaschine 18b, die zumindest eine Kopplungsvorrichtung 20b zu einer Kopplung der Werkzeugmaschinentrennvorrichtung 12b und zumindest eine Betriebsauflageeinheit 22b umfasst, die zumindest eine Auflagefläche 24b aufweist. Die Kopplungsvorrichtung 20b ist dazu vorgesehen, die Werkzeugmäschinentrennvorrichtung 12b formschlüssig und/oder kraftschlüssig mit der tragbaren Werkzeugmaschine 18b zu koppeln. Die Kopplungsvorrichtung 20b kann hierbei als Bajonettverschluss und/oder als eine andere, einem Fachmann als sinnvoll erscheinende Kopplungsvorrichtung ausgebildet sein.

Die tragbare Werkzeugmaschine 18b umfasst ferner zumindest ein Werkzeugmaschinengehäuse 32b, in dem zumindest eine Antriebseinheit 36b der tragbaren Werkzeugmaschine 18b angeordnet ist. Die Kopplungsvorrichtung 20b ist, betrachtet entlang einer zumindest im Wesentlichen parallel zu einer Antriebseinheitslängsachse 34b der Antriebseinheit 36b der tragbaren Werkzeugmaschine 18b, an einer der Betriebsauflageeinheit 22b zugewandten Seite 38b des Werkzeugmaschinengehäuses 32b angeordnet. Das Werkzeugmaschinengehäuse 32b umschließt die Antriebseinheit 36b und eine Getriebeeinheit 54b der tragbaren Werkzeugmaschine 18b und stützt Lagerkräfte der Antriebseinheit 36b und der Getriebeeinheit 54b ab.

Ferner umfasst die tragbare Werkzeugmaschine 18b zumindest einen Durchgriffhaupthandgriff 70b. Der Durchgriffhaupthandgriff 70b ist einstückig an das Werkzeugmaschinengehäuse 32b angeformt. Es ist jedoch auch denkbar, dass der Durchgriffhaupthandgriff 70b mittels einer Dämpfungseinheit der tragbaren Werkzeugmaschine 18b schwingungsentkoppelt an dem Werkzeugmaschinengehäuse 32b befestigt ist. Die Antriebseinheit 36b weist eine Antriebseinheitslängsachse 34b auf, die sich zumindest im Wesentlichen quer zu einer Handgrifflängsachse 72b des Durchgriffhaupthandgriffs 70b erstreckt. Hierbei verläuft die Handgrifflängsachse 72b des Durchgriffhaupthandgriffs 70b zumindest in einem an der Kopplungsvorrichtung 20b angeordneten Zustand der Werkzeugmaschinentrennvorrichtung 12b zumindest im Wesentlichen quer zu einer Längsachse 46b der Führungseinheit 16b. Die Handgrifflängsachse 72b des Durchgriffhaupthandgriffs 70b verläuft zumindest im Wesentlichen parallel zu einer Haupterstreckung eines Haupthandgriffelements 74b des Durchgriffhaupthandgriffs 70b. Das Haupthandgriffelement 74b des Durchgriffhaupthandgriffs 70b wird zu einer ordnungsgemäßen Handhabung der tragbaren Werkzeugmaschine 18b von einer Hand eines Bedieners umgriffen. Bei einem Umgreifen des Haupthandgriffelements 74b sind zumindest Teilbereiche von Fingern in einer Durchgriffausnehmung des Durchgriffhaupthandgriffs 70b angeordnet. Die Durchgriffausnehmung wird in einer Ebene, die zumindest im Wesentlichen senkrecht zur Auflagefläche 24b verläuft, vollständig von dem Durchgriffhaupthandgriff 70b begrenzt. Am Haupthandgriffelement 74b ist zumindest ein Bedienelement 58b einer Bedieneinheit 60b der tragbaren Werkzeugmaschine 18b angeordnet. Hinsichtlich weiterer Merkmale des Werkzeugmaschinensystems 10b aus Figur 2 darf auf das Werkzeugmaschinensystem 10a aus Figur 1 verwiesen werden.

## Patentansprüche

1. Werkzeugmaschinensystem mit zumindest einer Werkzeugmaschinentrennvorrichtung (12a; 12b), die zumindest einen Schneidstrang (14a; 14b) und zumindest eine Führungseinheit (16a; 16b), die zusammen mit dem Schneidstrang (14a; 14b) ein geschlossenes System bildet, umfasst, und mit zumindest einer tragbaren Werkzeugmaschine, die zumindest eine Kopplungsvorrichtung (20a; 20b) zu einer Kopplung der Werkzeugmaschinentrennvorrichtung (12a; 12b) und zumindest eine Betriebsauflageeinheit (22a; 22b) umfasst, die zumindest eine Auflagefläche (24a; 24b) aufweist, wobei die tragbare Werkzeugmaschine zumindest eine Führungsstangeneinheit (26a; 26b) umfasst, die zumindest ein Führungsstangenelement (28a; 28b) zu einer beweglichen Lagerung der Kopplungsvorrichtung (20a; 20b) entlang einer zumindest im Wesentlichen senkrecht zur Auflagefläche (24a; 24b) verlaufenden Hubachse (30a; 30b) der Führungsstangeneinheit (26a; 26b) relativ zur Betriebsauflageeinheit (22a; 22b) aufweist, **dadurch gekennzeichnet, dass** die tragbare Werkzeugmaschine zumindest ein Werkzeugmaschinengehäuse (32a; 32b) aufweist und die Führungsstangeneinheit (26a; 26b) zumindest ein Federelement (40a; 40b) aufweist, das die Betriebsauflageeinheit (22a; 22b) und das Werkzeugmaschinengehäuse (32a; 32b) relativ zueinander vorspannt.

2. Werkzeugmaschinensystem nach Anspruch 1, **dadurch gekennzeichnet, dass** die tragbare Werkzeugmaschine zumindest ein Werkzeugmaschinengehäuse (32a; 32b) umfasst, an dessen, betrachtet entlang einer zumindest im Wesentlichen parallel zu einer Antriebseinheitslängsachse (34a; 34b) einer Antriebseinheit (36a; 36b) der tragbaren Werkzeugmaschine verlaufenden Richtung, der Betriebsauflageeinheit (22a; 22b) zugewandten Seite (38a; 38b) die Kopplungsvorrichtung (20a; 20b) angeordnet ist.

3. Werkzeugmaschinensystem nach einem der vorhergehenden Ansprüche, **dadurch gekennzeichnet, dass** die tragbare Werkzeugmaschine zumindest eine Antriebseinheit (36a; 36b) umfasst, die eine zumindest im Wesentlichen parallel zu einer Schneidebene des Schneidstrangs (14a; 14b) und/oder zu einer Längsachse (46a; 46b) der Führungseinheit (16a; 16b) verlaufende Antriebseinheitslängsachse (34a; 34b) umfasst.

4. Werkzeugmaschinensystem nach einem der vorhergehenden Ansprüche, **dadurch gekennzeichnet, dass** die tragbare Werkzeugmaschine zumindest eine Eintauchtiefeneinstelleinheit (48a; 48b) umfasst, die, betrachtet entlang einer zumindest im Wesentlichen parallel zur Hubachse (30a; 30b) verlaufenden Richtung, eine Bewegungsstrecke der Kopplungsvorrichtung (20a; 20b) relativ zur Betriebsauflageeinheit (22a; 22b) begrenzt.

5. Werkzeugmaschinensystem nach einem der vorhergehenden Ansprüche, **dadurch gekennzeichnet, dass** die tragbare Werkzeugmaschine zumindest eine Arretiereinheit (50a; 50b) zu einer Arretierung der Kopplungsvorrichtung (20a; 20b) in einer Position relativ zur Betriebsauflageeinheit (22a; 22b) umfasst.

6. Werkzeugmaschinensystem nach einem der vorhergehenden Ansprüche, **dadurch gekennzeichnet, dass** die Führungsstangeneinheit (26a; 26b) zumindest ein weiteres Führungsstangenelement (52a; 52b) umfasst, das zumindest im Wesentlichen parallel zum Führungsstangenelement (28a; 28b) verläuft.

7. Werkzeugmaschinensystem nach einem der vorhergehenden Ansprüche, **dadurch gekennzeichnet, dass** die Führungseinheit (16a; 16b) zumindest eine Längsachse (46a; 46b) aufweist, die in einem an der Kopplungsvorrichtung (20a; 20b) angeordneten Zustand der Werkzeugmaschinentrennvorrichtung (12a; 12b) zumindest im Wesentlichen parallel zu einer Antriebseinheitslängsachse (34a; 34b) einer Antriebseinheit (36a; 36b) der tragbaren Werkzeugmaschine verläuft.

8. Werkzeugmaschinensystem nach einem der vorhergehenden Ansprüche, **dadurch gekennzeichnet, dass** die Führungseinheit (16a; 16b) zumindest eine Längsachse (46a; 46b) aufweist, die in einem an der Kopplungsvorrichtung (20a; 20b) angeordneten Zustand der Werkzeugmaschinentrennvorrichtung (12a; 12b) zumindest im Wesentlichen parallel zur Hubachse (30a; 30b) der Führungsstangeneinheit (26a; 26b) verläuft.

## Claims

1. Power-tool system having at least one power-tool parting device (12a; 12b) which comprises at least one cutting strand (14a; 14b) and at least one guide unit (16a; 16b) that forms a closed system together with the cutting strand (14a; 14b), and having at least one portable power tool which comprises at least one coupling device (20a; 20b) for coupling the power-tool parting device (12a; 12b) and at least one operating support unit (22a; 22b) which has at least one support surface (24a; 24b), wherein the portable power tool comprises at least one guide bar unit (26a; 26b) which has at least one guide bar element (28a; 28b) for mounting the coupling device (20a; 20b) in a movable manner relative to the operating support unit (22a; 22b) along a stroke axis (30a; 30b), extending at least substantially perpendicularly to the support surface (24a; 24b), of the guide bar unit (26a; 26b), **characterized in that** the portable power tool has at least one power-tool housing (32a; 32b) and the guide bar unit (26a; 26b) has at least one spring element (40a; 40b) which preloads the operating support unit (22a; 22b) and the power-tool housing (32a; 32b) relative to one another.

2. Power-tool system according to Claim 1, **characterized in that** the portable power tool comprises at least one power-tool housing (32a; 32b), the coupling device (20a; 20b) being arranged on the side (38a; 38b) of said power-tool housing (32a; 32b) that faces the operating support unit (22a; 22b) as seen in a direction extending at least substantially parallel to a drive-unit longitudinal axis (34a; 34b) of a drive unit (36a; 36b) of the portable power tool.

3. Power-tool system according to either of the preceding claims, **characterized in that** the portable power tool comprises at least one drive unit (36a; 36b) which comprises a drive-unit longitudinal axis (34a; 34b) extending at least substantially parallel to a cutting plane of the cutting strand (14a; 14b) and/or to a longitudinal axis (46a; 46b) of the guide unit (16a; 16b).

4. Power-tool system according to one of the preceding claims, **characterized in that** the portable power tool comprises at least one penetration-depth setting unit (48a; 48b) which limits a movement path of the coupling device (20a; 20b) relative to the operating support unit (22a; 22b), as seen in a direction extending at least substantially parallel to the stroke axis (30a; 30b).

5. Power-tool system according to one of the preceding claims, **characterized in that** the portable power tool comprises at least one locking unit (50a; 50b) for locking the coupling device (20a; 20b) in a position relative to the operating support unit (22a; 22b).

6. Power-tool system according to one of the preceding claims, **characterized in that** the guide bar unit (26a; 26b) comprises at least one further guide bar element (52a; 52b) which extends at least substantially parallel to the guide bar element (28a; 28b).

7. Power-tool system according to one of the preceding claims, **characterized in that** the guide unit (16a; 16b) has at least one longitudinal axis (46a; 46b) which extends at least substantially parallel to a drive-unit longitudinal axis (34a; 34b) of a drive unit (36a; 36b) of the portable power tool in a state in which the power-tool parting device (12a; 12b) is arranged on the coupling device (20a; 20b).

8. Power-tool system according to one of the preceding claims, **characterized in that** the guide unit (16a; 16b) has at least one longitudinal axis (46a; 46b) which extends at least substantially parallel to the stroke axis (30a; 30b) of the guide bar unit (26a; 26b) in a state in which the power-tool parting device (12a; 12b) is arranged on the coupling device (20a; 20b).

## Revendications

1. Système de machine-outil comprenant au moins un dispositif de coupe de machine-outil (12a ; 12b) qui comprend au moins une ligne de coupe (14a ; 14b) et au moins une unité de guidage (16a ; 16b) qui forme, conjointement avec la ligne de coupe (14a ; 14b), un système fermé et comprenant au moins une machine-outil portative qui comprend au moins un dispositif d'accouplement (20a ; 20b) pour former un accouplement du dispositif de coupe de machine-outil (12a ; 12b) et au moins une unité d'appui fonctionnelle (22a ; 22b) qui présente au moins une surface d'appui (24a ; 24b), la machine-outil portative comprenant au moins une unité de tige de guidage (26a ; 26b) qui présente au moins un élément de tige de guidage (28a ; 28b) pour former un support mobile du dispositif d'accouplement (20a ; 20b) le long d'un axe de levage (30a ; 30b) de l'unité de tige de guidage (26a ; 26b) s'étendant au moins essentiellement perpendiculairement à la surface d'appui (24a ; 24b), par rapport à l'unité d'appui fonctionnelle (22a ; 22b), **caractérisé en ce que** la machine-outil portative présente au moins un boîtier de machine-outil (32a ; 32b) et l'unité de tige de guidage (26a ; 26b) présente au moins un élément de ressort (40a ; 40b) qui précontraint l'unité d'appui fonctionnelle (22a ; 22b) et le boîtier de machine-outil (32a ; 32b) l'un par rapport à l'autre.

2. Système de machine-outil selon la revendication 1, **caractérisé en ce que** la machine-outil portative comprend au moins un boîtier de machine-outil (32a ; 32b) au niveau du côté (38a ; 38b) duquel est disposé le dispositif d'accouplement (20a ; 20b), ce côté étant tourné vers l'unité d'appui fonctionnelle (22a ; 22b), considéré le long d'une direction s'étendant au moins essentiellement parallèlement à un axe longitudinal de l'unité d'entraînement (34a ; 34b) d'une unité d'entraînement (36a ; 36b) de la machine-outil portative.

3. Système de machine-outil selon l'une quelconque des revendications précédentes, **caractérisé en ce que** la machine-outil portative comprend au moins une unité d'entraînement (36a ; 36b) qui comprend un axe longitudinal d'unité d'entraînement (34a ; 34b) s'étendant au moins essentiellement parallèlement à un plan de coupe de la ligne de coupe (14a ; 14b) et/ou à un axe longitudinal (46a ; 46b) de l'unité de guidage (16a ; 16b).

4. Système de machine-outil selon l'une quelconque des revendications précédentes, **caractérisé en ce que** la machine-outil portative comprend au moins une unité d'ajustement de la profondeur d'enfoncement (48a ; 48b) qui, considérée le long d'une direction s'étendant au moins essentiellement parallèlement à l'axe de levage (30a ; 30b), limite une section de déplacement du dispositif d'accouplement (20a ; 20b) par rapport à une unité d'appui fonctionnelle (22a ; 22b).

5. Système de machine-outil selon l'une quelconque des revendications précédentes, **caractérisé en ce que** la machine-outil portative comprend au moins une unité de blocage (50a ; 50b) pour effectuer un blocage du dispositif d'accouplement (20a ; 20b) dans une position par rapport à l'unité d'appui fonctionnelle (22a ; 22b).

6. Système de machine-outil selon l'une quelconque des revendications précédentes, **caractérisé en ce que** l'unité de tige de guidage (26a ; 26b) comprend au moins un élément de tige de guidage supplémentaire (52a ; 52b) qui s'étend au moins essentiellement parallèlement à l'élément de tige de guidage (28a ; 28b).

7. Système de machine-outil selon l'une quelconque des revendications précédentes, **caractérisé en ce que** l'unité de guidage (16a ; 16b) présente au moins un axe longitudinal (46a ; 46b) qui, dans un état du dispositif de coupe de machine-outil (12a ; 12b) disposé sur le dispositif d'accouplement (20a ; 20b), s'étend au moins essentiellement parallèlement à un axe longitudinal de l'unité d'entraînement (34a ; 34b) d'une unité d'entraînement (36a ; 36b) de la machine-outil portative.

8. Système de machine-outil selon l'une quelconque des revendications précédentes, **caractérisé en ce que** l'unité de guidage (16a ; 16b) présente au moins un axe longitudinal (46a ; 46b) qui, dans un état du dispositif de coupe de machine-outil (12a ; 12b) disposé sur le dispositif d'accouplement (20a ; 20b), s'étend au moins essentiellement parallèlement à l'axe de levage (30a ; 30b) de l'unité de tige de guidage (26a ; 26b).
